# EUROPÄISCHE PATENTSCHRIFT

(11) **EP 3 468 826 B1**
(45) Veröffentlichungstag und Bekanntmachung des Hinweises auf die Patenterteilung: **17.11.2021**
(21) Anmeldenummer: 17734650.9
(22) Anmeldetag: 14.06.2017
(51) Int. Cl.: B60K 17/35, B60K 17/346, F16H 48/12, F16H 48/19, B60K 23/08

(54) **HYDRAULISCHES KUPPLUNGSBETÄTIGUNGSSYSTEM MIT ON-DEMAND KUPPLUNGSBEÖLUNG**
HYRAULIC CLUTCH ACTUATION SYSTEM WITH ON-DEMAND CLUTCH OILING
SYSTÈME HYDRAULIQUE D'ACTIONNEMENT D'UN EMBRAYAGE MUNI D'UNE LUBRIFICATION À LA DEMANDE DE L'EMBRAYAGE

(30) Priorität: 14.06.2016 DE 102016110915
(43) Veröffentlichungstag der Anmeldung: 17.04.2019
(73) Patentinhaber: GKN AUTOMOTIVE LTD., Redditch Worcestershire B98 0AJ (GB)
(72) Erfinder: MÖHLMANN, Reinhard, 51467 Bergisch Gladbach (DE)
(74) Vertreter: btb IP Bungartz Baltzer Partnerschaft mbB Patentanwälte
(86) Internationale Anmeldenummer: PCT/EP2017/064591
(87) Internationale Veröffentlichungsnummer: WO 2017/216249

(56) Entgegenhaltungen:
- DE-A1-102011 102 277
- DE-U1- 20 221 469
- US-A1- 2004 129 475
- US-A1- 2005 023 102
- US-A1- 2009 298 648
- US-A1- 2014 008 172

## Beschreibung

Die Erfindung betrifft eine kupplungsgesteuerte Ausgleichseinheit eines Kraftfahrzeugs mit einem hydraulischen Kupplungsbetätigungssystem zur Steuerung der kupplungsgesteuerten Ausgleichseinheit innerhalb eines Antriebsstrangs eines Kraftfahrzeugs, wobei das Kupplungsbetätigungssystem zur Betätigung wenigstens einer Reibkupplung der Ausgleichseinheit eine fahrzustandsunabhängig betreibbare, insbesondere elektromotorisch betriebene Hydraulikpumpe zur Erzeugung von Hydraulikdruck in einer Hydraulikflüssigkeit umfasst, wobei wenigstens eine Kupplungsbetätigungseinrichtung zur Betätigung der wenigstens einen Reibkupplung vorgesehen ist, auf die von der Hydraulikpumpe erzeugter Hydraulikdruck als Kupplungsbetätigungsdruck über eine Kupplungsdruckleitung zu wirken vermag, und wobei die Ausgleichseinheit Baugruppenkomponenten, zum Beispiel Reibglieder der Reibkupplung aufweist, die zur Schmierung und/oder Kühlung über eine Beölungsleitung, zum Beispiel über eine Kupplungsbeölungsleitung, mit Kühl- und/oder Schmieröl zu beölen sind. Die Erfindung betrifft ferner ein Verfahren zum Betrieb einer derartigen Ausgleichseinheit.

Mit dem Begriff Kraftfahrzeug ist insbesondere ein Personenkraftwagen gemeint. Mit dem Begriff "Ausgleichseinheit" ist eine in den Antriebsstrang eines Kraftfahrzeugs eingebundene differentiallose oder differentialbehaftete kupplungsgesteuerte Ausgleichseinheit gemeint, die über eine Kupplungseinrichtung verfügt, mittels der die Weiterleitung der Antriebsleistung auf verschiedene Antriebsräder beeinflussbar ist. "Ausgleichseinheiten" sind insbesondere Querausgleichseinheiten oder Längsausgleichseinheiten, über die in einem Antriebsstrang eines Kraftfahrzeugs auftretende Differenzdrehzahlen einzelner Antriebsräder ausgeglichen werden, die bei Kurvenfahrten zwischen rechtem oder linkem Rad einer Achse (Querausgleich) oder zwischen Rädern der Vorder- oder Hinterachse (Längsausgleich) entstehen.

Dass eine Ausgleichseinheit "kupplungsgesteuert" ist, bedeutet zum Beispiel in Bezug auf eine Querausgleichseinheit, dass die Drehmomentübertragung über den Schaltzustand der Reibkupplung derart geregelt ist, dass bei offener Kupplung selbst bei hinreichenden Reibwerten zwischen den beiden mit der Ausgleichseinheit verbundenen Rädern der relevanten Achse und der Fahrbahn über die Querausgleichseinheit Antriebsdrehmoment nicht übertragen wird. Die Übertragung eines Drehmoments sowie bevorzugt auch die Verteilung des Drehmoments auf die einzelnen Räder oder andere Antriebsstrangkomponenten setzt bei kupplungsgesteuerten Ausgleichseinheiten auch bei hinreichenden Reibwerten zwischen Rädern und Fahrbahn einen Schaltzustand der Kupplung voraus, in dem diese zumindest teilweise geschlossen ist - also drehmomentübertragend geschaltet ist. Danach sind etwa klassische, formschlüssig wirkende Differentiale mit Kupplungen, die lediglich als Differentialsperre eingesetzt werden können, nicht als "kupplungsgesteuerte" Querausgleichseinheiten anzusehen, da derartige Differentiale auch bei offener Kupplung und hinreichendem Reibwert zwischen Fahrbahn und beiden Antriebsrädern Drehmoment übertragen. Entsprechendes gilt für kupplungsgesteuerte Längsausgleichseinheiten und die Übertragung eines Drehmoments auf die hierüber angetriebenen Achsen.

Hydraulisch zu betätigende Kupplungseinheiten für Quer- oder LängsAusgleichseinheiten eines Kraftfahrzeugs, bei denen für bestimmte Komponenten (z.B. Wälzlager oder ineinander greifenden Zahnräder) und insbesondere für die Kupplungen betriebszustandsabhängig entweder Kühlungs- und/oder Schmierungsbedarf besteht oder zwecks Vermeidung unnötiger Verlustleistung in bestimmten Betriebszuständen auf eine Beölung verzichtet werden soll, sind beispielsweise aus der DE 10 2010 036 826 A1, der EP 2 574 826 A1 oder der WO 2013/045444 A1 bekannt. Bei einem Teil dieser Systeme werden die Kupplungen über Ölfördereinrichtungen mit Kühl- bzw. Schmieröl versorgt, wobei über verschiedene Maßnahmen gewährleistet wird, dass die Ölfördereinrichtungen in bestimmten Betriebszuständen, in denen kein Beölungsbedarf besteht, stillgelegt werden, so dass die Kupplungen vollständig trockenlaufen können, um insbesondere flüssigkeitsreibungsbedingte Verlustleistung oder andauernde Planschverluste zu vermeiden. Trotzdem bleiben Planschverluste zumindest in den Betriebszuständen unvermeidlich, in denen für die Ölförderung zuständige Komponenten in ein Ölreservoir eintauchen müssen, um Öl zur Kühlung und/oder Schmierung von bestimmten Komponenten zu fördern. Diese Art der Ölförderung ist in Bezug auf den effektiv geförderten Kühl- und/oder Schmierölvolumenstrom generell ineffizient und mit Verlustleistung behaftet.

Weiter ist es aus der WO 2015/090392 A1 bekannt, Kupplungsbetätigungseinrichtungen von Kupplungen einer kupplungsgesteuerten Querausgleichseinheit mittels einer über einen drehzahlgeregelten Elektromotor angetriebenen Hydraulikpumpe mit Hydraulikdruck zu beaufschlagen.

Die Offenlegungsschrift US/2005/0023102 A1 beschreibt ein hydraulisches Kupplungsbetätigungssystem für ein herkömmliches Sperrdifferential mit einem Druckspeicher, der periodisch durch eine Pumpe beladen wird. Ansonsten wird die Pumpe zur Beölung der Kupplung eingesetzt. Über den Druckspeicher wird die Kupplung betätigt.

Nachteilig an den vorstehend genannten Ausgleichseinheiten und deren Beölungssystemen ist, dass die Kupplungen verhältnismäßig lange benötigen, um vollständig trocken zu laufen, so dass ein auf Flüssigkeitsreibung beruhendes Schleppmoment noch verhältnismäßig lange erhalten bleibt.

Außerdem benötigen derartige Systeme für die Versorgung der Reibkupplungen mit Kühl- bzw. Schmieröl einerseits und für die Kupplungsbetätigung mit Drucköl andererseits zwei voneinander getrennte Ölkreisläufe und demnach auch eine effektive Trennung von Kühl- bzw. Schmieröl auf der einen und Drucköl auf der anderen Seite durch entsprechende konstruktive Maßnahmen.

Hinzu kommt, dass die Kühl- bzw. Schmierölversorgung der Kupplung in vielen Betriebszuständen nicht dem tatsächlichen akuten Kupplungsbeölungsbedarf entspricht, da die Kupplungsbeölung maßgeblich von der Drehzahl der als Ölfördereinrichtungen fungierenden Tellerräder abhängig ist, deren Beölungspotential aber wiederum von der Fahrzeuggeschwindigkeit bestimmt ist. So baut sich zum Beispiel beim Anfahren, bei sehr langsamer Fahrt in einem die Querausgleichseinheit mit den Reibkupplungen in besonderem Maße beanspruchenden Gelände oder beim Zuschalten eines zuvor stillgelegten Teils eines Sekundärantriebsstrangs eine ausreichende Beölung erst langsam oder aber gar nicht erst in ausreichendem Maß auf, obwohl die Kupplungen gerade in diesen Fahrzuständen einen gesteigerten Beölungsbedarf zur Schmierung und Kühlung haben können.

Vor diesem Hintergrund ist es eine Aufgabe der Erfindung, eine kupplungsgesteuerte Ausgleichseinheit der eingangs genannten Art mit einem Kupplungsbeölungs- und Kupplungsbetätigungssystem und insbesondere eine Quer-Ausgleichseinheit mit einem solchen Kupplungsbeölungs- und Kupplungsbetätigungssystem zur Verfügung zu stellen, das eine verbesserte und zuverlässigere Beölung der Kupplung ermöglicht und insbesondere auch bei niedrigen Fahrzeuggeschwindigkeiten und starker Kupplungsbeanspruchung eine ausreichende Beölung sicherzustellen vermag. Trotzdem soll ein sehr zügiges Trockenlaufen der Kupplungen ermöglicht werden und die durch die Kupplungsbeölung generierte Verlustleistung soll bei gleichzeitiger hoher Druckregelqualität des für Kupplungsansteuerung verantwortlichen Kupplungsbetätigungssystems verringert sein.

Diese Aufgabe wird durch eine kupplungsgesteuerte Ausgleichseinheit gemäß Anspruch 1 gelöst.

Die Aufgabe wird also dadurch gelöst, dass von der Hydraulikpumpe geförderte Volumenstrom, insbesondere der bei der Ansteuerung der Kupplungsbetätigungseinrichtung anfallende Rücklauf-Volumenstrom, zumindest zum Teil den Baugruppenkomponenten, insbesondere der wenigstens einen Reibkupplung, als Kühl- und/oder Schmieröl zugeleitet ist.

Die Beölungsleitung ist dabei von der Kupplungsdruckleitung abgezweigt. Den beölungsbedürftigen Komponenten kann so als Kühl- und/oder Schmieröl die Hydraulikflüssigkeit, die auch als Drucköl die Kupplungsbetätigungseinrichtung betätigt, zugeleitet werden. Insbesondere kann die Hydraulikflüssigkeit den Reibgliedern als Kupplungsöl (Kühl- und/oder Schmieröl für die Reibglieder der Kupplung) zugeführt werden.

Dadurch, dass auf einen sich von dem Kupplungsdruck bereitstellenden Druckölkreislauf unterscheidenden Kühl- und Schmierölkreislauf (insbesondere Kupplungsöl) verzichtet wird und sowohl die Kupplungsbetätigung als auch die Kühl- und/oder Schmierölversorgung der Baugruppenkomponenten, insbesondere der üblicherweise als Kupplungseinrichtung verwendeten Lamellenkupplungen, in einem Ölkreislauf zusammengefasst sind und bevorzugt mittels derselben Ölfördereinrichtung, die auch den Kupplungsdruck für die Kupplungsansteuerung liefert, mit Öl versorgt sind, entfallen die aus dem Stand der Technik bekannten Nachteile weitgehend.

Die fahrzustandsunabhängig betreibbare, insbesondere elektromotorisch angetriebene Hydraulikpumpe gewährleistet aufgrund ihrer Entkopplung von den sich in Abhängigkeit von Fahrzeuggeschwindigkeit oder Motordrehzahl schneller oder langsamer drehenden Antriebsstrangkomponenten einen fahrzustandsunabhängigen Hydraulikdruckaufbau, der nicht von der Fahrzeuggeschwindigkeit oder der Motordrehzahl abhängig sein muss. Gleichzeitig ermöglicht eine derartig angetriebene Hydraulikpumpe die Stilllegung der Pumpe und damit die Vermeidung der damit einhergehenden Verlustleistung in Betriebszuständen, bei eine insbesondere mechanisch mit Antriebsstrangkomponenten gekoppelte Pumpe systembedingt angetrieben wird.

Insbesondere ergibt sich eine verbesserte und zuverlässigere Versorgung der Baugruppenkomponenten, vor allem der thermisch besonders beanspruchten Kupplung(en), aber auch von Lagern und Radsätzen, mit Kühl- und/oder Schmieröl, auch bei niedrigen Fahrzeuggeschwindigkeiten und bei Fahrzuständen wie beim Anfahren oder bei extrem langsamer Fahrt zum Beispiel in schwerem Gelände. Die ansonsten erforderliche Trennung eines Druckölkreislaufs und eines Kupplungsölkreislaufs kann entfallen, was zu Einsparungen führt. Zudem wird die Beölung der Baugruppenkomponenten, insbesondere der Kupplungen, unabhängig von der Höhe eines im Kupplungs- bzw. Differentialgehäuse bestehenden Ölniveaus.

Wenn ein und dieselbe Ölfördereinrichtung sowohl den Kupplungsdruck zur Kupplungssteuerung als auch den für die Komponentenbeölung, insbesondere den für die Kupplungsbeölung notwendigen Öldruck bzw. Ölvolumenstrom bereitstellt, hat dies zur Folge, dass die für das Kupplungssystem vorteilhafte Regelung, bei der die Beölungsleitung, insbesondere die Kupplungsbeölungsleitung, nur dann mit Kühl- und/oder Schmieröl versorgt wird, wenn auch die Kupplungsdruckleitung mit Kupplungsdruck beaufschlagt ist, dem System immanent ist. Denn dann, wenn kein Öldruck für das Schließen der Kupplung und damit für das Übertragen von Drehmoment bereitgestellt wird, findet mangels vorliegenden Hydraulikdrucks auch keine (in diesem Fall ohnehin nicht erforderliche) Komponentenbeölung statt. Das System stellt sich damit schon aufgrund seiner konstruktiven Grundkonzeption als "On Demand" Beölungssystem dar, bei dem zum Beispiel eine Kupplungsbeölung oder eine Beölung sonstiger Baugruppenkomponenten mit Kühl- und/oder Schmieröl nur stattfindet, wenn mittels der Kupplungen auch tatsächlich Drehmoment übertragen werden soll und damit überhaupt Beölungsbedarf infolge beispielsweise beanspruchter Kupplungen besteht. Sobald die Ölfördereinrichtung keinen Druck mehr zur Verfügung stellt, weil kein Drehmoment mehr über die Kupplungen übertragen werden soll, stellt sich ohne weiteres Zutun systemimmanent auch die Komponenten- und Kupplungsbeölung unmittelbar ein.

Im Übrigen vermag sich das System auf diese Weise systemimmanent auch dahingehend weitgehend selbst zu regeln, dass dann, wenn die Ölfördereinrichtung besonders hohen Druck, insbesondere den maximalen Systemdruck, zur Übertragung eines hohen Drehmoments bereitstellt und ein besonders hoher Beölungsbedarf besteht, das System auch einen hohen Ölvolumenstrom für die Kupplungsbeölung zur Verfügung zu stellen vermag.

Dies ist beispielsweise dann relevant, wenn bei einer differentiallosen kupplungsgesteuerten Quer- oder Längs-Ausgleichseinheit trotz hoher Drehmomentbeanspruchung der Kupplungen eine zwischen zwei Rädern eine Achse oder zwischen Vorder- und Hinterachse bestehende Differenzdrehzahl über die Kupplungen abgebaut werden soll. In einem derartigen Fall ist der Energieeintrag in die Reibglieder der den Schlupf zulassenden Kupplung besonders hoch und es besteht gerade bei hoher Beanspruchung der Kupplung ein besonders hoher Beölungsbedarf. So ist beispielsweise bei einem allradbetriebenen Fahrzeug der Wärmeenergieeintrag in die Schlupf zulassende Kupplung schon bei alltäglichen Fahrzuständen wie einer Kurvenfahrt, bei der über die wenigstens Kupplung sowohl zwischen Vorder- und Hinterachse als auch zwischen rechtem und linkem Antriebsrad einer Achse Differenzdrehzahlen abgebaut werden, besonders hoch. Anders als bei Kupplungsbetätigungssystemen, bei denen davon ausgegangen werden kann, dass die Kupplung bei maximalem Hydraulikdruck und damit maximalem Kupplungsdruck vollständig geschlossen ist und daher kein Beölungsbedarf, insbesondere kein Kühlungsbedarf, besteht, da die Kupplung keinen Schlupf aufweist, ist dies bei Kupplungen von kupplungsgesteuerten Ausgleichseinheiten gerade nicht der Fall. Hier fallen Fahrzustände, die den maximalen Hydraulikdruck erfordern, oft mit einem maximalen Beölungsbedarf zusammen.

Das Kupplungsbetätigungssystem kann demnach insbesondere gewährleisten, dass je höher das über die Kupplungen zu übertragende Drehmoment ist, auch der Volumenstrom, der dem System zur Kupplungsbeölung entnommen werden kann, höher ist. Das Kupplungsbetätigungssystem kann derart eingerichtet sein, dass bei hohem, insbesondere auch bei maximalem von der Hydraulikpumpe bereitgestelltem Hydraulikdruck eine Kühl- und Schmierölversorgung der Reibglieder der wenigstens einen Reibkupplung gewährleistet ist. Insbesondere kann auf eine Beölungsabschaltung, mittels der bei voll geschlossener und mit maximalem Systemdruck beaufschlagter Kupplung die Kupplungsbeölung abgeschaltet oder blockiert wird, weil davon ausgegangen wird, dass in diesem Zustand mangels auftretendem Kupplungsschlupf kein Beölungsbedarf besteht, verzichtet sein.

Bevorzugt werden die Baugruppenkomponenten über Komponentenbeölungsblenden, Kupplungen also über Kupplungsbeölungsblenden, beölt, wobei das Kupplungsbetätigungssystem mittels der Abstimmung von Beölungsblenden und Hydraulikpumpe kalibriert ist. Beölungsblenden eignen sich für eine effektive und preisgünstige Volumenstrombegrenzung des zur Kupplungsbeölung verwendeten Ölstroms und gewährleisten bei entsprechender Dimensionierung des effektiven Durchtrittsquerschnitts gleichzeitig einen ausreichend hohen Leitungswiderstand zum schnellen Aufbau des für die Ansteuerung der Kupplungsaktuatorik erforderlichen Druckniveaus. Über den geeigneten Blendendurchtrittsquerschnitt lassen sich nicht nur die notwendigen, druckabhängigen Beölungscharakteristika des Systems gut einstellen, sondern auch eine hohe Druckregelqualität erzielen, indem die Blenden infolge ihres hydraulischen Widerstandes einerseits einen steilen Druckanstieg, gleichzeitig aber auch einen zügigen, einer Drehzahlreduzierung der Hydraulikpumpe unmittelbar folgenden Druckabbau ermöglichen. Somit ist das System durch Abstimmung der Pumpleistung und der Beölungsblenden aufeinander kalibrierbar. Die Beölungsblenden bestimmen dabei als engste Stellen den hydraulischen Widerstand des Systems. Die Beölungsblenden und die Hydraulikpumpe lassen sich zudem unabhängig von dem Design der Ausgleichseinheit einsetzen.

Insgesamt ergibt sich durch die vorstehend beschriebenen Maßnahmen eine signifikante Effizienzsteigerung nicht nur durch die deutliche Verringerung bis hin zur vollständigen Vermeidung jeglicher Planschverluste auch bei beanspruchter Kupplungseinrichtung und gleichzeitiger Komponentenbeölung. Vielmehr wird der bei einem hydraulischen Druckregelungssystem auftretende Rücklauf-Volumenstrom, der bei Ansteuerung einer hydraulischen Kupplungsbetätigungseinrichtung mittels einer im Betrieb zwecks Aufbau des Kupplungsbetätigungsdrucks kontinuierlich Volumenstrom fördernden drehzahl- und/oder druckgeregelten Hydraulikpumpe entsteht, nicht einfach ungenutzt in ein Hydraulikflüssigkeitsreservoir zurückgeleitet. Sondern der anfallende Rücklauf-Volumenstrom wird gezielt beölungsbedürftigen Komponenten als Kühl- und/oder Schmieröl, insbesondere der Kupplung als Kupplungsöl, zugeleitet.

Die Beölungsblenden sind bevorzugt derart kalibriert, dass sie im Betrieb, also bei einem für die Kupplungsbetätigung im bestimmungsgemäßen Betrieb auftretenden Druckniveau und bei üblichen Betriebstemperaturen, einen Ölvolumenstrom zur Komponenten- bzw. Kupplungsbeölung bis maximal 1,5 l/min zulassen.

In dem Kupplungsbetätigungssystem ist wenigstens ein Kupplungssteuerventil vorgesehen, über das der Kupplungsdruck gesteuert wird, wobei die Kupplungsdruckleitung von einem zwischen dem wenigstens einen Kupplungssteuerventil und der Kupplungsbetätigungseinrichtung verlaufenden Leitungsabschnitt gebildet ist, und wobei die Beölungsleitung, insbesondere ein Kupplungsbeölungsleitung, von der Kupplungsdruckleitung abzweigt. Eine Beschickung der Beölungsleitung, insbesondere der Kupplungsbeölungsleitung, mit der verwendeten Hydraulikflüssigkeit findet bei einer derartigen Anordnung, bei der der Abzweig der Beölungsleitung dem Kupplungssteuerventil nachgelagert ist, also nur statt, wenn die Kupplungsdruckleitungen auch mit Kupplungsdruck beaufschlagt sind.

Nicht erfindungsgemäß ist es möglich, dass die Beölungsleitung, insbesondere die Kupplungsbeölungsleitung, von einer Verteilungsleitung abzweigt, die von einem Leitungsabschnitt gebildet ist, der zwischen der Hydraulikpumpe und dem wenigstens einen Kupplungssteuerventil verläuft. Hierbei ist der Abzweig der Beölungsleitung dem Kupplungssteuerventil vorgelagert. Eine derartige Anordnung lässt die Möglichkeit offen, die Beölungsleitung, insbesondere die Kupplungsbeölungsleitung, von den Kupplungsbetätigungsventilen derart zu entkoppeln, dass der in der Beölungsleitung vorherrschende Druck nicht direkt von dem in der Kupplungsdruckleitung vorherrschenden und vom Kupplungssteuerventil eingeregelten Kupplungsdruck abhängig ist, sondern unabhängig von diesem eingestellt werden kann. Trotzdem gewährleistet auch dieses System, dass in Fahrzuständen mit hohem Kupplungsdruck bei gleichzeitig maximalem Energieeintrag in die Reibglieder auch die maximale Beölungsleistung abgerufen werden kann.

Die Beölungsleitung, insbesondere die Kupplungsbeölungsleitung, weist bevorzugt einen oder mehrere Beölungsabzweige auf, wobei in der Beölungsleitung, die die einzelnen Beölungsabzweige versorgt, eine Hauptbeölungsblende vorgesehen ist, die den Beölungsabzweigen vorgeschaltet ist. Durch eine derartige Maßnahme wird der Kühl- und/oder Schmierölfluss, insbesondere der Kupplungsölfluss, durch den sich über der Hauptbeölungsblende einstellenden Differenzdruck mitbestimmt. In den einzelnen von der Beölungsleitung abgehenden Beölungszweigen können dann weitere Beölungsblenden vorgesehen sein, über die die Verteilung des Ölflusses für jeden einzelnen Beölungspunkt über die Wahl der durch die Beölungsblenden bereitgestellten Durchflusswiderstände eingestellt werden kann.

In einer vorteilhaften Ausgestaltung kann insbesondere alternativ zu einer Hauptbeölungsblende ferner vorgesehen sein, dass in der Beölungsleitung, insbesondere der Kupplungsbeölungsleitung, ein regelbares Beölungssteuerventil angeordnet ist. Dies ermöglicht es, den Kühl- und/oder Schmierölfluss, insbesondere den Kupplungsölfluss, unabhängig von einem Differenzdruckverhältnis einzustellen. Gegenüber der Verwendung einer (Haupt-)Beölungsblende kann ein deutlich höherer Ölvolumenstrombereich abgedeckt werden und es ist, je nach Betriebszustand, ein deutlich geringerer energetischer Aufwand zur Bereitstellung des erforderlichen Ölvolumenstroms erforderlich.

Ein weiterer Vorteil der Anwendung eines Beölungssteuerventils in der Beölungsleitung, insbesondere der Kupplungsbeölungsleitung, ist, dass der Ölvolumenstrom unabhängig von der Drehmomentanforderung der Kupplungen und dem entsprechend vorliegenden Kupplungsdruck eingeregelt werden kann. Es ist auch möglich, die Beölung trotz Drehmomentanforderung der Kupplungen vollständig einzustellen, was etwa dann sinnvoll sein kann, wenn die Kupplungen vollständig, das heißt schlupffrei, geschlossen sind, so dass eine Kupplungsbeölung überflüssig ist. Gleichwohl gewährleistet auch eine derartige Ausgestaltung, dass in dem Moment, in dem die Reibkupplung trotz des hohen anliegenden Kupplungsdrucks hohen Energieeintrag erfährt, etwa weil plötzlich ein Ausgleich einer Differenzdrehzahl über die Reibglieder dieser Kupplung erforderlich wird (z.B. bei Kurvenfahrt), trotz hohem zu übertragenden Drehmoment eine schnell einsetzende und hohe Beölungsleistung.

Bei einem Beölungssteuerventil handelt es sich bevorzugt um ein VBS (Variable Bleed Solenoid). Der Einsatz derartiger Ventile, die bauartbedingt eine bestimmte Ventilleckage aufweisen, kann bei einem System, bei dem eine Beölung von Komponenten der Ausgleichseinheit über eine definierte Beölungsleckage einer dem Ventil nachgeschalteten Kupplungsdruckleitung ermöglicht wird, vorteilhaft sein. Denn die Beölungsleckage wird über die dem Ventil innewohnende Ventilleckage abgedeckt. Das Ventil kann so in einer für dessen Regelbarkeit günstigeren, einen höheren Leckagestrom gewährleistenden Stellung betrieben werden.

Auch wenn die Kupplungsbeölungsleitung maßgeblich dafür Sorge tragen soll, dass die Kupplungen bei vorliegendem Drehmomentbedarf mit Kühl- bzw. Schmieröl versorgt werden, können von der Kupplungsbeölungsleitung selbstverständlich ein oder mehrere Komponentenbeölungsleitungen abzweigen. Mit "Komponentenbeölung" ist - im Gegensatz zur "Kupplungsbeölung" - insbesondere die Beölung von Komponenten wie Zahnrädern oder Wälz- bzw. Gleitlagern gemeint, die nicht der Kupplung direkt zugeordnet sind und die insbesondere unabhängig von einem an den Kupplungen auftretenden Beölungsbedarf beölt werden müssen. Dies kann insbesondere auf Komponenten zutreffen, die von den auf der Straße abrollenden Rädern auch dann geschleppt werden und daher auch dann rotieren, wenn die Kupplungen ganz offen sind und keine Fahrzeugantriebsleistung über die Ausgleichseinheit übertragen wird. Auch die Komponentenbeölungsleitungen können selbstverständlich mit Beölungsblenden versehen sein. Die Komponentenbeölungsleitungen zweigen bevorzugt von der Kupplungsbeölungsleitung ab.

Das regelbare Beölungssteuerventil kann dem Abzweig der Komponentenbeölungsleitungen vorgeschaltet sein, wobei dann eine Auswahl zwischen gleichzeitiger Kupplungs- und Komponentenbeölung einerseits oder ausschließlicher Komponentenbeölung andererseits nicht ohne weiteres möglich ist.

Um eine Steuerung des Systems derart zu ermöglichen, dass einerseits die Kupplungen sowie solche Komponenten, die nur bei gleichzeitigem Kupplungsbeölungsbedarf beölt werden müssen, und andererseits Komponenten, die unabhängig von einem etwaig bestehenden Kupplungsbeölungsbedarf beölt werden müssen, jeweils unabhängig voneinander beölt werden können, kann in der Kupplungsbeölungsleitung ein Absperrventil angeordnet sein, das die Kupplungsbeölungsleitung erst bei Erreichen einer hinreichenden Öffnungsdruckschwelle durchgängig schaltet. Wenn das regelbare Beölungssteuerventil dem Absperrventil vorgeschaltet ist, können über das Beölungssteuerventil, solange das Absperrventil geschlossen ist, ausschließlich die Komponenten, die unabhängig von einem etwaig bestehenden Kupplungsbeölungsbedarf beölt werden müssen, beölt werden, während der Strang der Beölungsleitung, der die Kupplungen beölt, abgesperrt bleibt.

Das Absperrventil kann druckgeschaltet, insbesondere systemdruckgeschaltet oder kupplungsdruckgeschaltet, sein, wozu es steuerseitig über eine Steuerleitung mit einer Verteilungsleitung oder zumindest einer Kupplungsdruckleitung verbunden sein kann. Die Steuerleitung kann also an einem Abzweig von der Verteilungsleitung abzweigen, wobei das Beölungssteuerventil bevorzugt zwischen diesem Abzweig und dem Absperrventil angeordnet ist. Damit wird das Absperrventil erst dann geschaltet, wenn von der Hydraulikpumpe ein ausreichender Systemdruck, der die Öffnungsdruckschwelle übersteigt, bereitgestellt wird. Gleichzeitig kann das Beölungsregelventil schon vor Erreichen der Öffnungsdruckschwelle öffnen, um die Komponenten zu beölen, für die Beölungsbedarf auch bei nicht zu beölenden Kupplungen besteht. Die Steuerleitung kann aber selbstverständlich auch von den Kupplungsdruckleitungen abzweigen, so dass der Kupplungsdruck für das Überschreiten oder Unterschreiten der Öffnungsdruckschwelle maßgeblich ist.

In einer weiteren Ausführungsform einer mit zwei Kupplungen versehenen Ausgleichseinheit, bei der über jeweils eine Kupplung die Leistungsübertragung an ein Antriebsrad gesteuert wird und bei der für eine erste Reibkupplung eine erste Kupplungsdruckleitung und für eine zweite Reibkupplung eine zweite Kupplungsdruckleitung vorgesehen ist, um die Kupplungsbetätigungseinrichtungen der beiden Kupplungen mit Kupplungsdruck zu beaufschlagen, kann vorgesehen sein, dass die erste Kupplungsdruckleitung und die zweite Kupplungsdruckleitung mit jeweils einem Eingang eines Wechselventils verbunden sind, wobei das Absperrventil steuerseitig mit dem Ausgang des Wechselventils über eine Steuerleitung verbunden ist. Hierdurch ist sichergestellt, dass bei in den beiden Kupplungsdruckleitungen vorherrschenden unterschiedlichen Druckniveaus immer der jeweils höhere Druck für das Überschreiten oder Unterschreiten der Öffnungsdruckschwelle des Absperrventils herangezogen wird und sich somit das Beölungsverhalten an der stärker mit Druck beaufschlagten Kupplung ausrichtet.

Die eingesetzte Hydraulikpumpe ist bevorzugt drehzahlgesteuert und/oder drehmomentgeregelt, so dass eine Veränderung des Hydraulikdrucks über eine Drehzahländerung der Hydraulikpumpe und bevorzugt infolge einer Abweichung des Soll-Kupplungsmoments von einem momentanen Ist-Wert mittels eines Regeleingriffs erfolgt, insbesondere infolge einer Erhöhung oder Verringerung einer Drehmomentanforderung. Dies ermöglicht zum einen eine einfache Einregelung des Systemdrucks über die Drehzahl der Hydraulikpumpe und eine zügige Anpassung des Druckniveaus und damit des Kupplungsmoments bei sich ändernden Anforderungen und zum anderen auch eine sofortige Abschaltung.

Weiter wird zur Erfindung gehörig angesehen ein Verfahren nach Anspruch 14, zum Betreiben einer kupplungsgesteuerten Ausgleichseinheit bei dem ein hydraulischer Systemdruck in einer Hydraulikflüssigkeit mittels einer Hydraulikpumpe erzeugt wird, eine Kupplungsbetätigungseinrichtung insbesondere einer Reibglieder aufweisenden Reibkupplung mit einem hydraulischen Kupplungsdruck über eine Kupplungsdruckleitung beaufschlagt wird, und die Baugruppenkomponenten der Ausgleichseinheit, insbesondere die Reibglieder der Reibkupplung, mit Kühl- und/oder Schmieröl über eine Beölungsleitung zwecks Schmieren und/oder Kühlen der Baugruppenkomponenten beölt werden. Insbesondere sollen die Reibglieder der Reibkupplung mit Kühl- und/oder Schmieröl (Kupplungsöl) versorgt werden. Dabei wird den Baugruppenkomponenten, insbesondere den Reibgliedern der Reibkupplung, zur Beölung die Hydraulikflüssigkeit als Kupplungsöl zugeführt.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt
- Fig. 1: eine schematische Darstellung eines hydraulischen Kupplungsbetätigungssystems einer kupplungsgesteuerten Querausgleichseinheit mit einer Kupplung und formschlüssig wirkendem Differential,
- Fig. 2: eine schematische Darstellung eines hydraulischen Kupplungsbetätigungssystems einer differentiallos arbeitenden kupplungsgesteuerten Querausgleichseinheit mit zwei Kupplungen und einem Kupplungssteuerventil je Kupplung,
- Fig. 3: eine schematische Darstellung eines hydraulischen Kupplungsbetätigungssystems einer differentiallos arbeitenden kupplungsgesteuerten Querausgleichseinheit mit zwei Kupplungen, einem Kupplungssteuerventil je Kupplung und einer Hauptbeölungsblende in einer Kupplungsbeölungsleitung,
- Fig. 4: eine schematische Darstellung eines hydraulischen Kupplungsbetätigungssystems einer kupplungsgesteuerten Querausgleichseinheit mit einer Kupplung und formschlüssig wirkendem Differential mit einem Beölungssteuerventil in einer Kupplungsbeölungsleitung,
- Fig. 5: eine schematische Darstellung eines hydraulischen Kupplungsbetätigungssystems einer differentiallos arbeitenden kupplungsgesteuerten Querausgleichseinheit mit zwei Kupplungen, einem Kupplungssteuerventil je Kupplung und einem Beölungssteuerventil in einer Kupplungsbeölungsleitung sowie einer zusätzlichen Komponentenbeölung,
- Fig. 6: eine schematische Darstellung eines hydraulischen Kupplungsbetätigungssystems einer kupplungsgesteuerten Querausgleichseinheit mit einer Kupplung und formschlüssig wirkendem Differential mit einem Beölungssteuerventil und einem Absperrventil in einer Kupplungsbeölungsleitung sowie mit einer zusätzlichen Komponentenbeölung,
- Fig. 7: eine schematische Darstellung eines hydraulischen Kupplungsbetätigungssystems einer differentiallos arbeitenden kupplungsgesteuerten Querausgleichseinheit mit zwei Kupplungen, einem Kupplungssteuerventil je Kupplung und einem Beölungssteuerventil sowie einem über den Kupplungsdruck gesteuerten Absperrventil in einer Kupplungsbeölungsleitung und einer zusätzlichen Komponentenbeölung, und
- Fig. 8: eine Figur 7 entsprechende Ausführungsform, bei der das Absperrventil über den in einer Verteilerleitung herrschenden Druck gesteuert ist.

In den nachfolgend beschriebenen Figuren wird die Erfindung anhand einer kupplungsgesteuerten Querausgleichseinheit beschrieben.

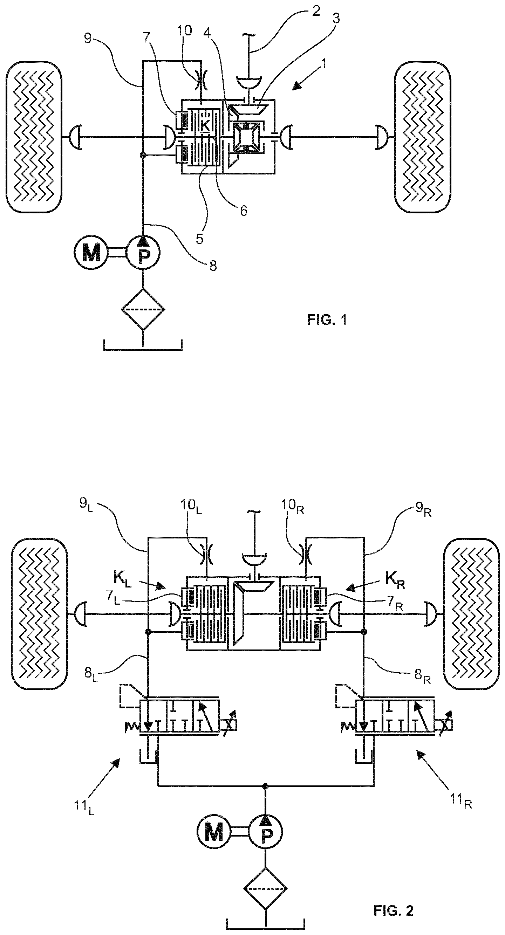

Die Figuren 1, 3, 4, 5, 6 und 8 stellen jedoch keine erfindungsgemäße Ausgleichseinheit dar.

Die in einigen Figuren bestimmten Bezugszeichen zugeordneten Buchstaben "L" und "R" stehen für das jeweils linke ("L") oder rechte ("R") Bauteil des in Teilen symmetrischen Grundaufbaus der in einigen der Figuren gezeigten Ausführungsformen.

Die Figuren zeigen zwei verschiedene Varianten einer kupplungsgesteuerten Querausgleichseinheit, von denen die eine eine Kupplung und ein Differential aufweist und von denen die andere differentiallos mit zwei Kupplungen K_{L} und K_{R} ausgestattet ist, wobei die Kupplung K_{L} die Antriebsleistung auf das linke und die Kupplung K_{R} die Antriebsleistung auf das rechte Antriebsrad überträgt. Die zu den jeweiligen Ausgleichseinheiten dargestellten Kupplungsbetätigungssysteme und die jeweilige Beölungsarchitektur sowie der Einsatz der hierbei eingesetzten Komponenten lässt sich unter Berücksichtigung des Wegfalls oder des Hinzufügens einer Kupplung sinngemäß von der einen Variante auf die andere Variante übertragen.

In Figur 1 ist eine kupplungsgesteuerte Querausgleichseinheit 1 einer Achse eines Personenkraftwagens zusammen mit einem Kupplungsbetätigungssystem in einer vereinfachten, schematischen Ansicht gezeigt. Abhängig vom Kupplungszustand kann die in Figur 1 dargestellte Querausgleichseinheit Drehmoment auf die beiden Antriebsräder übertragen. Bei geöffneter Kupplung wird kein Drehmoment übertragen, bei geschlossener Kupplung wird Drehmoment übertragen, wobei die Höhe des übertragenen Drehmoments abhängig vom eingeregelten Kupplungsschlupf ist, der über die Höhe des von einer Pumpe P zur Verfügung gestellten hydraulischen Kupplungsdrucks eingeregelt ist. Ist die Kupplung vollständig (schlupffrei) geschlossen, arbeitet die dargestellte Querausgleichseinheit wie ein klassisches, formschlüssig wirkendes Differential.

Die Antriebleistung des Fahrzeugantriebs wird über ein Eingangsglied 2 wie eine Kardanwelle und ein damit verbundenes Antriebsrad 3 auf ein Tellerrad 4 weitergeleitet und von dort auf einen Antriebslamellenträger 5 übertragen (in Figur 1 der Außenlammellenträger), dem jeweils axial verschieblich angeordnete Antriebslamellen drehfest zugeordnet sind. Diese Antriebslamellen wirken mit Abtriebslamellen zusammen, die wiederum auf einem Abtriebslamellenträger 6 (in Figur 1 der Innenlamellenträger) axial verschieblich aber drehfest angeordnet sind. Die so gebildete Kupplungseinheit K stellt eine grundsätzlich bekannte Lamellenkupplung dar.

Der Kupplungseinheit ist eine Kupplungsbetätigungseinrichtung mit einem hydraulisch zu betätigenden Kupplungsaktuator A zugeordnet, der über eine von einem drehzahlgeregelten Elektromotor M drehend angetriebene Hydraulikpumpe P mit Drucköl versorgt wird, wobei die Kupplungseinrichtung im Betrieb zum Aufbau des Kupplungsbetätigungsdrucks dauerhaft Öl fördert, so dass ein Rücklauf-Volumenstrom anfällt.

In der von der Hydraulikpumpe zum Kupplungsaktuator führenden Hydraulikleitung ist ein Abzweig vorgesehen, der in eine mit einer Beölungsblende 10 versehenen Kupplungsbeölungsleitung 9₁ mündet, über die die Kupplung K mit Kupplungsöl (Kühl- bzw. Schmieröl) versorgt wird, in dem der bei der hydraulischen Kupplungsansteuerung anfallende Rücklauf-Volumenstrom über die Kupplungsbeölungsleitung der Kupplung K als Kupplungsöl (Kühl- und/oder Schmieröl für die Kupplungslamellen) zugeleitet ist.

Abhängig von dem von der Pumpe P zur Verfügung gestellten Druckniveau, dass sich trotz der grundsätzlich offenen, in ihrem Durchtrittsquerschnitt aber sehr begrenzten Beölungsblende 10 bei Einschalten der Pumpe P bzw. des die Pumpe P antreibenden Motors M schnell aufzubauen vermag, wird die Kupplung K gleichzeitig mit dem Aufbau des Druckniveaus zum Schalten der Kupplung mit Kupplungsöl versorgt, das zur Schmierung und/oder Kühlung der Reiblamellen verwendet wird.

Bei Abschalten des Motors M und damit der Pumpe P baut sich der Druck in den zum selben Ölkreislauf gehörenden und von derselben Pumpe P gespeisten Ölleitungen 8 und 9 zügig ab, die Kupplung öffnet sich und gleichzeitig sowie ohne weiteres Zutun stoppt auch die Kupplungsbeölung, so dass die Kupplung unter zügigem Abbau etwaiger hydrodynamischer Reibungseffekte schnell trocken läuft.

Figur 2 zeigt einen Aufbau einer ausschließlich reibschlüssig arbeitenden Querausgleichseinheit, bei dem das auf die beiden Antriebsräder zu verteilende Drehmoment ausschließlich über zwei Reibkupplungen K_{L} und K_{R} auf die der jeweiligen Kupplung zugeordneten Antriebsräder weitergeleitet wird. Anders als in Figur 1 kommt kein Differential mit formschlüssig ineinandergreifenden Antriebsgliedern zum Einsatz. Die Ausgleichseinheit stellt eine differentiallos arbeitende kupplungsgesteuerte Querausgleichseinheit dar.

Der von der Hydraulikpumpe P bereitgestellte Druck wird über zwei VFS Steuerventile 11_{L} und 11_{R} (Variable Force Solenoid), die im Normalzustand geschlossen sind ("normally closed"), über die Kupplungsdruckleitungen 8_{L} und 8_{R} zum Kupplungsaktuator 7 der jeweiligen Kupplung weitergeleitet. Durch entsprechende Steuerung der Steuerventile 11_{R} und 11_{L} wird der Druck kupplungsindividuell auf das für den jeweiligen Fahrzustand benötigte Druckniveau eingeregelt, so dass die über die Kupplungen übertragene Antriebsleistung antriebsradindividuell eingestellt werden kann.

Jeder der beiden Kupplungen ist eine Kupplungsbeölungsleitung 9 zugeordnet, mittels der das für die Kupplungsbeölung benötigte Öl der jeweiligen Kupplung über jeweils eine Beölungsblende 10 zugeführt wird. Die Kupplungsbeölungsleitungen 9_{L} und 9_{R} sind aus Sicht der Hydraulikpumpe P gesehen hinter den Steuerventilen 11_{L} und 11_{R} angeordnet und zweigen von den Kupplungsdruckleitungen 8_{L} und 8_{R} ab. Hierdurch wird gewährleistet, dass jede Kupplung ausschließlich dann mit Kupplungsöl versorgt wird, wenn über die Steuerventile überhaupt Kupplungsdruck zum Schließen der Kupplungen auf die Kupplungsaktuatoren 7 gegeben wird.

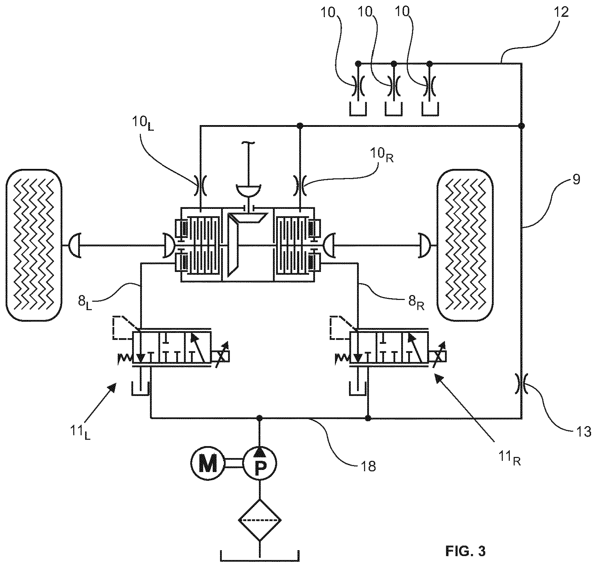

Das in Figur 3 gezeigte Ausführungsbeispiel entspricht hinsichtlich der Ausgestaltung der kupplungsgesteuerten Ausgleichseinheit weitgehend dem in Figur 2 gezeigten Ausführungsbeispiel, wobei das Kupplungssteuerungssystem eine Kupplungsbeölungsleitung 9 aufweist, die allerdings - anders als die in Figuren 1 und 2 gezeigten Beölungsleitungen 9 - aus Sicht der Hydraulikpumpe P gesehen vor den Kupplungssteuerventilen abzweigt. In der Kupplungsbeölungsleitung 9 ist eine Hauptbeölungsblende 13 vorgesehen, über die im Betrieb ein Differenzdruck abfällt, mit der der maximale an den einzelnen Beölungspunkten auftretende Beölungsdruck wirksam reduziert und begrenzt werden kann.

Von der zu den Kupplungen führenden Kupplungsbeölungsleitung und nach der Hauptbeölungsblende von diesem abzweigend ist ein Beölungsabzweig 12 vorgesehen, über den zum Beispiel Zahnräder oder Lager beölt werden können. Auch die von diesem Beölungsabzweig 12 versorgten Beölungspunkte sind mit Beölungsblenden 10 versehen, die an den Beölungsbedarf am jeweiligen Beölungspunkt angepasst sind.

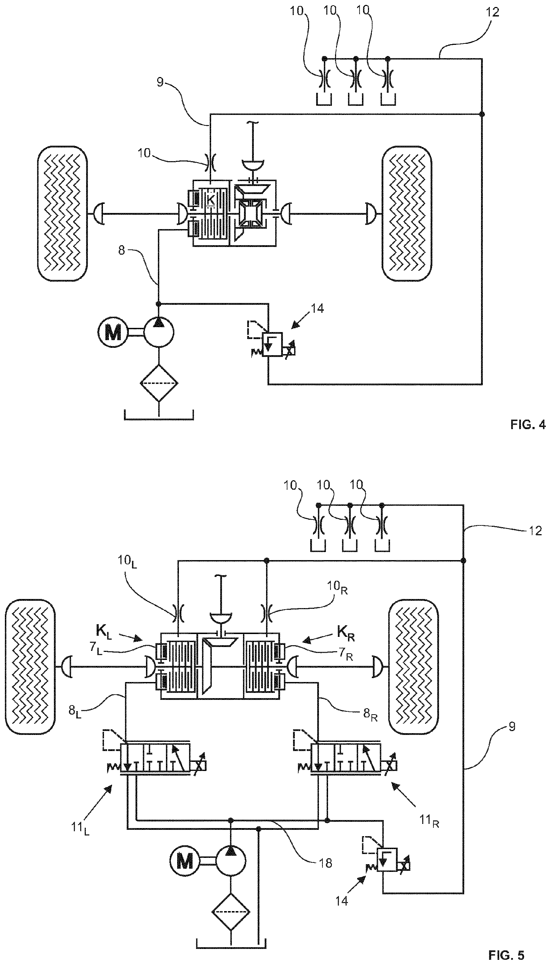

Figur 4 verdeutlicht zeigt ein Kupplungsbetätigungssystem für eine Querausgleichseinheit, wie sie auch in Figur 1 gezeigt ist. Anders als in Figur 1 ist in der Kupplungsbeölungsleitung 9 ein Beölungssteuerventil 14 in Form eines VBS (Variable Bleed Solenoid, bevorzugt mit Normalschaltzustand geöffnet) vorgesehen. Der für die Kupplungsbeölung zur Verfügung stehende Ölvolumenstrom kann gegenüber einer Verwendung einer Hauptbeölungsblende in der Kupplungsbeölungsleitung bei gleichzeitig geringerer Leistungsaufnahme der Hydraulikpumpe deutlich erhöht werden. Der Kupplungsölvolumenstrom kann ferner unabhängig von der Fahrzeuggeschwindigkeit, Drehmomentanforderung der Kupplung und von der Differenzdrehzahl zwischen den beiden Antriebsrädern eingestellt werden.

Innerhalb der Kupplungsbeölungsleitung 9 mit dem Beölungsabzweig 12 erfolgt die Verteilung des Ölvolumenstroms wie in Figur 3 den hydraulischen Widerständen der vor den einzelnen Beölungspunkten vorgesehenen Beölungsblenden.

Figur 5 zeigt das in Figur 4 dargestellte Kupplungsbetätigungssystem für eine differentiallos arbeitende Querausgleichseinheit wie sie bereits in den Figuren 2 und 3 gezeigt ist.

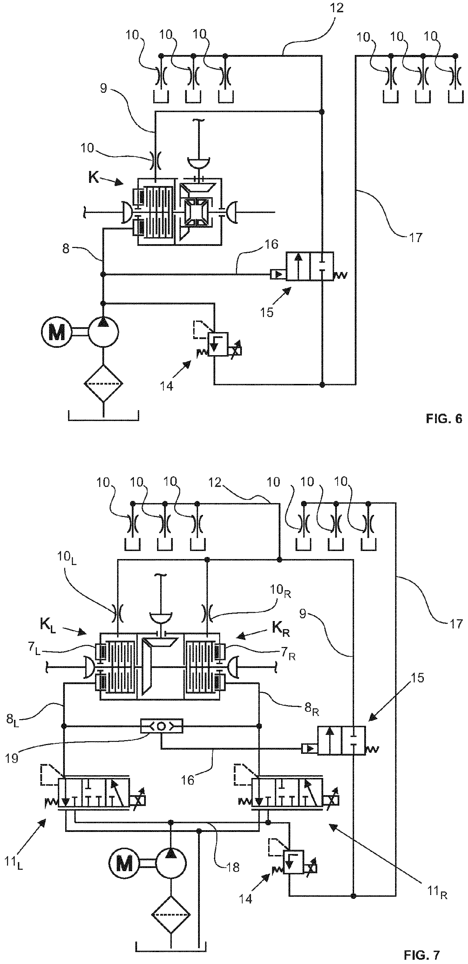

Figur 6, Figur 7 und Figur 8 verdeutlichen eine weitere mögliche Ausgestaltung eines Kupplungsbetätigungssystems mit einem in der Kupplungsbeölungsleitung befindlichen Absperrventil 15, über das die zu den Kupplungen führende Beölungsleitung betriebszustandsabhängig abgesperrt oder durchgängig geschaltet werden kann.

Das Absperrventil ist bevorzugt von einem Sitzventil (seat type valve) gebildet und bevorzugt druckgesteuert, so dass es bei Überschreiten einer vorgegebenen Öffnungsdruckschwelle die Kupplungsbeölungsleitung freigibt. Es können aber auch Schieberventile (spool type valves) zum Einsatz kommen, wobei Sitzventile wegen des einfacheren Aufbaus, der höheren Belastbarkeit und geringeren Leckageanfälligkeit sowie der geringen Empfindlichkeit gegen Verunreinigungen im hydraulischen System bevorzugt sind. Das Absperrventil kann aber auch elektronisch ansteuerbar sein. Der Normalzustand des Absperrventils ist bevorzugt geschlossen ("normally closed"). Der Schaltpunkt bzw. die Öffnungsdruckschwelle kann etwa zwischen 2 bar und 4 bar liegen.

Durch das Vorsehen eines derartigen Absperrventils ist es möglich, das von der Kupplungsbeölungsleitung an einem dem Beölungssteuerventil nachgelagerten, dem Absperrventil jedoch vorgelagerten Abzweig eine Komponentenbeölungsleitung 17 abzweigt, die Komponenten mit Öl versorgt, die unabhängig von dem Beölungsbedarf der Kupplungen Beölungsbedarf haben können. Die in den Figuren gezeigte Anordnung von Beölungssteuerventil 14, Absperrventil 15 und Position des Abzweigs zur Komponentenbeölungsleitung 17 ermöglicht eine gezielte Beölung von Komponenten unabhängig von der Frage, ob an den Kupplungen Beölungsbedarf besteht.

So kann bei der in den Figuren 6, 7 und 8 gezeigten Ausgestaltung durch Schließen des Beölungssteuerventils 14 die Komponentenbeölung vollständig stillgelegt oder auf einen bestimmten Volumenstrom eingeregelt werden, während die zu den Kupplungen führende Beölungsleitung nur dann freigegeben wird, wenn der Kupplungsdruck (Figur 6 und Figur 7) oder der in einer den Kupplungssteuerventilen 11_{L} und 11_{R} vorgelagerten Verteilungsleitung 18 herrschende Systemdruck die Öffnungsdruckschwelle des Absperrventils 15 übersteigt.

In Figur 6 und Figur 7 ist das druckgeregelte Absperrventil 15 steuerseitig mit der bzw. den Kupplungsdruckleitungen 8 über eine Steuerleitung 16 verbunden. Hierdurch ist der in den Kupplungsdruckleitungen vorherrschende Druck für das Über- oder Unterschreiten der Öffnungsdruckschwelle maßgeblich.

Bei dem in Figur 7 dargestellten Ausführungsbeispiel sind die Kupplungsdruckleitungen 8_{L} und 8_{R} über ein Wechselventil 19 mit der Steuerleitung verbunden, so dass immer der höhere der in den beiden Kupplungsdruckleitungen herrschende Druck maßgeblich dafür ist, ob das druckgesteuerte Absperrventil 15 die Beölungsleitung durchgängig schaltet.

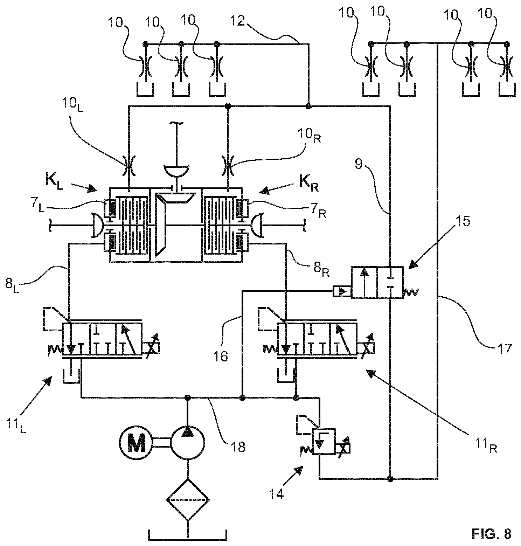

Bei dem in Figur 8 gezeigten Ausführungsbeispiel ist die Steuerleitung 16 mit einer Verteilungsleitung 18 verbunden. Hier ist nicht der über die Kupplungssteuerventile 11_{L} oder 11_{R} eingeregelte Kupplungsbetätigungsdruck in den Kupplungsdruckleitungen für das Über- oder Unterschreiten der Öffnungsdruckschwelle des Schaltventils 15 maßgeblich, sondern der von der Hydraulikpumpe in die Verteilungsleitung 18 gelieferte Systemdruck.

Die in den Figuren 6, 7 und 8 dargestellten Ausführungsformen machen es möglich, dass der Ölvolumenstrom für die Kupplungen unabhängig von der Fahrzeuggeschwindigkeit, von Differenzdrehzahlen an den Antriebsrädern und von der Höhe des Kupplungsdrehmoments gesteuert werden kann. Der Ölvolumenstrom, insbesondere der Kupplungsölvolumenstrom aber auch ein etwaiger Volumenstrom für eine sonstige Komponentenbeölung, kann daher unmittelbar den jeweiligen betriebszustandsabhängigen Anforderungen angepasst werden und ermöglicht eine zügige und vollständige Abschaltung der Kupplungsbeölung auch bei stattfindender Beölung von sonstigen Komponenten, die unabhängig von den Kupplungen zu beölen sind.

### Bezugszeichenliste

- 1: Querausgleichseinheit
- 2: Eingangsglied
- 3: Antriebsrad
- 4: Tellerrad
- 5: Antriebslamellenträger
- 6: Abtriebslamellenträger
- 7_{(L,R)}: Kupplungsaktuator
- 8_{(L,R)}: Kupplungsdruckleitung
- 9_{(L,R)}: Kupplungsbeölungsleitung
- 10_{(L,R)}: Beölungsblende
- 11_{(L,R)}: Kupplungssteuerventil
- 12: Beölungsabzweig
- 13: Hauptbeölungsblende
- 14: Beölungssteuerventil
- 15: Absperrventil
- 16: Steuerleitung
- 17: Komponentenbeölungsleitung
- 18: Verteilungsleitung
- 19: Wechselventil

- K: Kupplung
- M: Elektromotor
- P: Hydraulikpumpe

## Patentansprüche

1. Kupplungsgesteuerte Ausgleichseinheit eines Kraftfahrzeugs mit einem hydraulischen Kupplungsbetätigungssystem, wobei das Kupplungsbetätigungssystem zur Betätigung wenigstens einer Reibkupplung (K) der Ausgleichseinheit (1) eine fahrzustandsunabhängig betreibbare Hydraulikpumpe (P) zur Erzeugung von Hydraulikdruck in einer Hydraulikflüssigkeit umfasst, wobei wenigstens eine Kupplungsbetätigungseinrichtung (7) zur Betätigung der wenigstens einen Reibkupplung (K) vorgesehen ist, auf die von der Hydraulikpumpe (P) erzeugter Hydraulikdruck mittels der Hydraulikflüssigkeit als Kupplungsdruck über eine Kupplungsdruckleitung (8) zu wirken vermag, und wobei die Ausgleichseinheit (1) Baugruppenkomponenten, insbesondere Reibglieder der Reibkupplung (K), aufweist, die zur Schmierung und/oder Kühlung über eine Beölungsleitung (9), insbesondere über eine Kupplungsbeölungsleitung, mit Kühl- und/oder Schmieröl zu beölen sind,
wobei der von der Hydraulikpumpe (P) geförderte Volumenstrom zumindest zum Teil den Baugruppenkomponenten, insbesondere den Reibgliedern der Reibkupplung (K) als Kühl- und/oder Schmieröl zugeleitet ist, **dadurch gekennzeichnet, dass** das Kupplungsbetätigungssystem wenigstens ein Kupplungssteuerventil (11) umfasst, über das der Kupplungsdruck gesteuert wird, wobei die Kupplungsdruckleitung (8) von einem zwischen dem wenigstens einen Kupplungssteuerventil (11) und der Kupplungsbetätigungseinrichtung (7) verlaufenden Leitungsabschnitt gebildet ist, und wobei die Beölungsleitung (9) dem Kupplungssteuerventil nachgelagert von der Kupplungsdruckleitung (8) abzweigt.

2. Ausgleichseinheit nach Anspruch 1, **dadurch gekennzeichnet, dass** in der Beölungsleitung (9) wenigstens eine Beölungsblende (10) vorgesehen ist.

3. Ausgleichseinheit nach dem vorhergehenden Anspruch, **dadurch gekennzeichnet, dass** die wenigstens eine Beölungsblende (10) derart dimensioniert ist, dass sie bei den im Kupplungsbetätigungssystem im bestimmungsgemäßen Betrieb vorherrschenden Betriebsdrücken und Betriebstemperaturen einen Volumenstrom in der Beölungsleitung (9) zwischen 0 l/min und 1,5 l/min zulässt.

4. Ausgleichseinheit nach einem der vorhergehenden Ansprüche, **dadurch gekennzeichnet, dass** das Kupplungsbetätigungssystem derart eingerichtet ist, dass die Beölungsleitung (9) nur dann mit Kühl- und/oder Schmieröl versorgt wird, wenn auch die Kupplungsdruckleitung (8) mit Kupplungsdruck beaufschlagt ist.

5. Ausgleichseinheit nach einem der vorhergehenden Ansprüche, **dadurch gekennzeichnet, dass** die Beölungsleitung (9) einen oder mehrere Beölungsabzweige (12) aufweist, und dass in der Beölungsleitung (9) eine Hauptbeölungsblende (13) vorgesehen ist, die den Beölungsabzweigen (12) vorgeschaltet ist.

6. Ausgleichseinheit nach einem der vorhergehenden Ansprüche, **dadurch gekennzeichnet, dass** in der Beölungsleitung (9) ein Beölungssteuerventil (14) angeordnet ist.

7. Ausgleichseinheit nach einem der vorhergehenden Ansprüche, **dadurch gekennzeichnet, dass** von der Beölungsleitung (9) ein oder mehrere Komponentenbeölungsleitungen (17) abzweigen.

8. Ausgleichseinheit nach den beiden vorhergehenden Ansprüchen, **dadurch gekennzeichnet, dass** das Beölungssteuerventil (14) dem Abzweig der einen oder mehreren Komponentenbeölungsleitungen (17) vorgeschaltet ist.

9. Ausgleichseinheit nach einem der vorhergehenden Ansprüche, **dadurch gekennzeichnet, dass** in der Beölungsleitung (9) ein Absperrventil (15) angeordnet ist, das die Beölungsleitung (9) erst bei Erreichen einer hinreichenden Öffnungsdruckschwelle durchgängig schaltet.

10. Ausgleichseinheit nach dem vorhergehenden Anspruch in Verbindung mit einem der Ansprüche 6, 7 in Verbindung mit 6 oder 8, **dadurch gekennzeichnet, dass** das Beölungssteuerventil (14) dem Absperrventil (15) vorgeschaltet ist.

11. Ausgleichseinheit nach einem der beiden vorhergehenden Ansprüche, **dadurch gekennzeichnet, dass** für eine erste Reibkupplung (K_{L}) eine erste Kupplungsdruckleitung (9_{L}) und für eine zweite Reibkupplung (K_{R}) eine zweite Kupplungsdruckleitung (9_{R}) vorgesehen ist, um die Kupplungsbetätigungseinrichtungen (7_{L}, 7_{R}) der beiden Kupplungen mit Kupplungsdruck zu beaufschlagen, wobei die erste Kupplungsdruckleitung (9_{L}) und die zweite Kupplungsdruckleitung (9_{R}) mit jeweils einem Eingang eines Wechselventils (19) verbunden sind, und wobei das Absperrventil (15) steuerseitig mit dem Ausgang des Wechselventils (19) über eine Steuerleitung (16) verbunden ist.

12. Ausgleichseinheit nach einem der vorhergehenden Ansprüche in Verbindung mit Anspruch 9, **dadurch gekennzeichnet, dass** das Absperrventil (15) steuerseitig über eine Steuerleitung (16) mit einer Verteilungsleitung verbunden ist, wobei die Steuerleitung (16) an einem Abzweig von der Verteilungsleitung (18) abzweigt, und wobei das Beölungssteuerventil (14) zwischen dem Abzweig und dem Absperrventil (15) angeordnet ist.

13. Ausgleichseinheit nach einem der vorhergehenden Ansprüche, **dadurch gekennzeichnet, dass** die Hydraulikpumpe (P) eine drehzahlgesteuert oder druckgeregelte, über einen Elektromotor drehend angetriebene Hydraulikpumpe ist.

14. Verfahren zum Betreiben einer kupplungsgesteuerten Ausgleichseinheit nach einem der vorherigen Ansprüche, umfassend die Schritte
- Erzeugen eines Hydraulikdrucks in einer Hydraulikflüssigkeit mittels einer fahrzustandsunabhängig antreibaren Hydraulikpumpe (P),
- Beaufschlagen einer Kupplungsbetätigungseinrichtung (7) einer Reibglieder aufweisenden Reibkupplung (K) mit einem hydraulischen Kupplungsdruck über eine Kupplungsdruckleitung (8), und
- Beölen von Baugruppenkomponenten der Ausgleichseinheit, insbesondere der Reibglieder der Reibkupplung, mit Kühl- und/oder Schmieröl über eine Beölungsleitung (9) zwecks Schmieren und/oder Kühlen der Baugruppenkomponenten, insbesondere der Reibglieder,
**dadurch gekennzeichnet, dass** den Baugruppenkomponenten, insbesondere den Reibgliedern, zur Beölung die Hydraulikflüssigkeit als Kühl- und/oder Schmieröl zugeführt wird.

## Claims

1. A clutch-controlled compensation unit for a motor vehicle, with a hydraulic clutch actuation system, wherein for actuation of at least one friction clutch (K) of the compensation unit (1), the clutch actuation system comprises a hydraulic pump (P) which can be operated independently of driving state for generating hydraulic pressure in a hydraulic fluid, wherein at least one clutch actuation device (7) is provided for actuating the at least one friction clutch (K), on which the hydraulic pressure generated by the hydraulic pump (P) by means of the hydraulic fluid may act as a clutch pressure via a clutch pressure line (8), and wherein the compensation unit (1) comprises assembly components, in particular friction members of the friction clutch (K), which are to be oiled with cooling and/or lubricating oil for lubrication and/or cooling via an oiling line (9), in particular via a clutch oiling line,
wherein a volume flow conveyed by the hydraulic pump (P) is conducted at least partially to the assembly components, in particular the friction members of the friction clutch (K), as cooling and/or lubricating oil, **characterized in that** the clutch actuation system comprises at least one clutch control valve (11) via which the clutch pressure is controlled, wherein the clutch pressure line (8) is formed by a line portion running between the at least one clutch control valve (11) and the clutch actuation device (7), and wherein the oiling line (9) branches off the clutch pressure line (8) downstream of the clutch control valve.

2. The compensation unit as claimed in claim 1, **characterized in that** at least one oiling diaphragm (10) is provided in the oiling line (9).

3. The compensation unit as claimed in the preceding claim, **characterized in that** the at least one oiling diaphragm (10) is dimensioned such that under the operating pressures and operating temperatures prevailing in the clutch actuation system in proper use, it allows a volume flow in the oiling line (9) of between 0 l/min and 1.5 l/min.

4. The compensation unit as claimed in any of the preceding claims, **characterized in that** the clutch actuation system is configured such that the oiling line (9) is supplied with cooling and/or lubricating oil only if the clutch pressure line (8) is also loaded with clutch pressure.

5. The compensation unit as claimed in any of the preceding claims, **characterized in that** the oiling line (9) has one or more oiling branches (12), and **in that** a main oiling diaphragm (13) is arranged in the oiling line (9) upstream of the oiling branches (12).

6. The compensation unit as claimed in any of the preceding claims, **characterized in that** an oiling control valve (14) is arranged in the oiling line (9).

7. The compensation unit as claimed in any of the preceding claims, **characterized in that** one or more component oiling lines (17) branch off the oiling line (9).

8. The compensation unit as claimed in the two preceding claims, **characterized in that** the oiling control valve (14) is connected upstream of the branch point of the one or more component oiling lines (17).

9. The compensation unit as claimed in any of the preceding claims, **characterized in that** a shut-off valve (15) is arranged in the oiling line (9) and only opens the oiling line (9) if an adequate opening pressure threshold has been reached.

10. The compensation unit as claimed in the preceding claim in conjunction with one of claims 6, 7 in combination with claim 6, or 8, **characterized in that** the oiling control valve (14) is connected upstream of the shut-off valve (15).

11. The compensation unit as claimed in any of the preceding claims, **characterized in that** a first clutch pressure line (9_{L}) is provided for a first friction clutch (K_{L}), and a second clutch pressure line (9_{R}) is provided for a second friction clutch (K_{R}), in order to load the clutch actuation devices (7_{L}, 7_{R}) of the two clutches with clutch pressure, wherein the first clutch pressure line (9_{L}) and the second clutch pressure line (9_{R}) are each connected to an input of a changeover valve (19), and wherein the shut-off valve (15) is connected on the control side to the output of the changeover valve (19) via a control line (16).

12. The compensation unit as claimed in any of the preceding claims in conjunction with claim 9, **characterized in that** the shut-off valve (15) is connected on the control side to a distribution line via a control line (16), wherein the control line (16) branches off the distribution line (18) at a branch point, and wherein the oiling control valve (14) is arranged between the branch point and the shut-off valve (15).

13. The compensation unit as claimed in any of the preceding claims, **characterized in that** the hydraulic pump (P) is controlled by rotation speed or regulated by pressure and driven in rotation via an electric motor.

14. A method for operating a clutch-controlled compensation unit as claimed in any of the preceding claims, comprising the steps
- generating a hydraulic pressure in a hydraulic fluid by means of a hydraulic pump (P) which can be driven independently of driving state,
- loading a clutch actuation device (7) of a friction clutch (K) comprising friction members with a hydraulic clutch pressure via a clutch pressure line (8), and
- oiling of assembly components of the compensation unit, in particular the friction members of the friction clutch, with cooling and/or lubricating oil via an oiling line (9) for the purpose of lubricating and/or cooling the assembly components, in particular the friction members,
**characterized in that** the hydraulic fluid is supplied as cooling and/or lubricating oil to the assembly components, in particular the friction members, for oiling.

## Revendications

1. Unité d'équilibrage commandée par embrayage d'un véhicule automobile avec un système d'actionnement d'embrayage hydraulique, dans laquelle le système d'actionnement d'embrayage pour l'actionnement d'au moins un embrayage à friction (K) de l'unité d'équilibrage (1) comprend une pompe hydraulique (P) pouvant être actionnée indépendamment de l'état d'entraînement pour générer une pression hydraulique dans un fluide hydraulique, dans laquelle au moins un dispositif d'actionnement d'embrayage (7) est prévu pour actionner le au moins un embrayage à friction (K), sur lequel la pression hydraulique générée par la pompe hydraulique (P) peut agir au moyen du fluide hydraulique en tant que pression d'embrayage par l'intermédiaire d'une conduite de pression d'embrayage (8), et dans laquelle l'unité d'équilibrage (1) présente des composants d'un ensemble, en particulier des éléments de friction de l'embrayage à friction (K), qui doivent être lubrifiés avec de l'huile de refroidissement et/ou de lubrification pour la lubrification et/ou le refroidissement par l'intermédiaire d'une conduite de lubrification (9), en particulier par l'intermédiaire d'une conduite de lubrification d'embrayage,
dans lequel le débit volumétrique fourni par la pompe hydraulique (P) est au moins partiellement fourni aux composants d'un ensemble, en particulier aux éléments de friction de l'embrayage à friction (K), en tant qu'huile de refroidissement et/ou de lubrification, **caractérisé en ce que** le système d'actionnement d'embrayage comprend au moins une soupape de commande d'embrayage (11), par laquelle la pression d'embrayage est commandée, la conduite de pression d'embrayage (8) étant formée par un tronçon de conduite s'étendant entre l'au moins une soupape de commande d'embrayage (11) et le dispositif d'actionnement d'embrayage (7), et la conduite de lubrification (9) dérivant de la conduite de pression d'embrayage (8) en aval de la soupape de commande d'embrayage.

2. Unité d'équilibrage selon la revendication 1, **caractérisée en ce qu'**au moins un orifice de lubrification (10) est prévu dans la conduite de lubrification (9).

3. Unité d'équilibrage selon la revendication précédente, **caractérisée en ce que** l'au moins un orifice de lubrification (10) est dimensionné de manière à permettre un débit volumique dans la conduite de lubrification (9) compris entre 0 l/min et 1,5 l/min aux pressions de fonctionnement et aux températures de fonctionnement régnant dans le système d'actionnement d'embrayage pendant le fonctionnement prévu.

4. Unité d'équilibrage selon l'une des revendications précédentes, **caractérisée en ce que** le système d'actionnement de l'embrayage est conçu de telle sorte que la conduite de lubrification (9) n'est alimentée en huile de refroidissement et/ou de lubrification que lorsque la conduite de pression d'embrayage (8) est également soumise à la pression de l'embrayage.

5. Unité d'équilibrage selon l'une des revendications précédentes, **caractérisée en ce que** la conduite de lubrification (9) comporte une ou plusieurs branches de lubrification (12), et **en ce qu'**un orifice de lubrification principal (13) est prévu dans la conduite de lubrification (9), qui est monté en amont des branches de lubrification (12).

6. Unité d'équilibrage selon l'une des revendications précédentes, **caractérisée en ce qu'**une soupape de commande de lubrification (14) est disposée dans la conduite de lubrification (9).

7. Unité d'équilibrage selon l'une des revendications précédentes, **caractérisée en ce qu'**une ou plusieurs conduites de lubrification de composants (17) partent de la conduite de lubrification (9).

8. Unité d'équilibrage selon les deux revendications précédentes, **caractérisée en ce que** la soupape de commande de lubrification (14) est connectée en amont de la branche de la ou des conduites de lubrification des composants (17).

9. Unité d'équilibrage selon l'une des revendications précédentes, **caractérisée en ce qu'**une soupape d'arrêt (15) est disposée dans la conduite de lubrification (9), qui ne laisse passer la conduite de lubrification (9) que lorsqu'un seuil de pression d'ouverture suffisant est atteint.

10. Unité d'équilibrage selon la revendication précédente en liaison avec l'une des revendications 6, 7 en liaison avec 6 ou 8, **caractérisée en ce que** la soupape de commande de lubrification (14) est montée en amont de la soupape d'arrêt (15).

11. Unité d'équilibrage selon l'une des deux revendications précédentes, **caractérisée en ce qu'**une première conduite de pression d'embrayage (9_{L}) est prévue pour un premier embrayage à friction (K_{L}) et une deuxième conduite de pression d'embrayage (9_{R}) est prévue pour un deuxième embrayage à friction (K_{R}) afin d'appliquer une pression d'embrayage aux dispositifs d'actionnement d'embrayage (7_{L}, 7_{R}) des deux embrayages avec la pression d'embrayage, la première conduite de pression d'embrayage (9_{L}) et la deuxième conduite de pression d'embrayage (9_{R}) étant reliées chacune à une entrée d'une soupape de commutation (19), et la soupape d'arrêt (15) étant reliée côté commande à la sortie de la soupape de commutation (19) par une conduite de commande (16).

12. Unité d'équilibrage selon l'une des revendications précédentes en liaison avec la revendication 9, **caractérisée en ce que** la soupape d'arrêt (15) est reliée côté commande à une conduite de distribution par l'intermédiaire d'une conduite de commande (16), la conduite de commande (16) bifurquant de la conduite de distribution (18) au niveau d'une branche, et la soupape de commande de lubrification (14) étant disposée entre la branche et la soupape d'arrêt (15).

13. Unité d'équilibrage selon l'une des revendications précédentes, **caractérisée en ce que** la pompe hydraulique (P) est une pompe hydraulique à vitesse ou à pression régulée entraînée en rotation par un moteur électrique.

14. Procédé de mise en oeuvre d'une unité d'équilibrage commandée par embrayage selon l'une quelconque des revendications précédentes, comprenant les étapes suivantes
- Génération d'une pression hydraulique dans un fluide hydraulique au moyen d'une pompe hydraulique (P) qui peut être entraînée indépendamment de la condition de conduite,
- Application d'une pression hydraulique d'embrayage à un dispositif d'actionnement d'embrayage (7) d'un embrayage à friction (K) comportant des éléments de friction par l'intermédiaire d'une conduite de pression d'embrayage (8), et
- Lubrification des composants d'un ensemble de l'unité d'équilibrage, en particulier des éléments de friction de l'embrayage à friction, avec de l'huile de refroidissement et/ou de lubrification par l'intermédiaire d'une conduite de lubrification (9) afin de lubrifier et/ou de refroidir les composants d'un ensemble, en particulier les éléments de friction,
**caractérisé en ce que** le fluide hydraulique est fourni sous forme d'huile de refroidissement et/ou de lubrification aux composants d'un ensemble, en particulier aux éléments de friction, pour leur lubrification.
